# EUROPEAN PATENT SPECIFICATION

(11) **EP 2 996 316 B1**
(45) Date of publication and mention of the grant of the patent: **26.04.2017**
(21) Application number: 15181416.7
(22) Date of filing: 18.08.2015
(51) Int. Cl.: H04M 1/725, G06F 1/16

(54) **METHODS AND SYSTEMS FOR COMMUNICATION MANAGEMENT BETWEEN AN ELECTRONIC DEVICE AND A WEARABLE ELECTRONIC DEVICE**
VERFAHREN UND SYSTEME ZUR KOMMUNIKATIONSVERWALTUNG ZWISCHEN EINER ELEKTRONISCHEN VORRICHTUNG UND EINER TRAGBAREN ELEKTRONISCHEN VORRICHTUNG
PROCÉDÉS ET SYSTÈMES DE GESTION DE COMMUNICATION ENTRE UN DISPOSITIF ÉLECTRONIQUE ET UN DISPOSITIF ÉLECTRONIQUE PORTABLE

(30) Priority: 09.09.2014 TW 103130940
(43) Date of publication of application: 16.03.2016
(73) Proprietor: Noodoe Corporation, Taipei City 115 (TW)
(72) Inventor: HSU, Chih-Feng, 115 Taipei City (TW); HOU, Yi-An, 115 Taipei City (TW)
(74) Representative: Karakatsanis, Georgios

(56) References cited:
- US-A1- 2011 059 769

## Description

### BACKGROUND

### Technical Field

The disclosure relates generally to communication management methods and systems, and, more particularly to methods and systems that can appropriately manage the communications between an electronic device and a wearable electronic device.

### Description of the Related Art

Recently, electronic devices, such as smart phones, tablets, notebooks, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

On the other hand, with the coming of IOT (Internet Of Things) generation, every device or object can connect to networks, and users can access and control these devices or objects via networks. Currently, wearable electronic devices have become the most tangible applications of IOT. In some cases, the wearable device can detect health information of a user, record exercise information and sleep patterns, or display email messages or incoming calls notifications.

Since there is a size limitation to wearable electronic devices, the battery capacity and battery life of the devices are high priority issues in the industry. US 20110059769 A1 discloses a remote phone manager, which allows a person to manage some of the functions of a cell phone without having to actually have the phone in her hands. For example, the invention allows the user to know of the incoming call and further allows the user to send a user-specified message to the caller and/or otherwise manage how the call should be handled through a remote device. In certain embodiments, the invention is comprised of: a decorative watch-like or bracelet-like case; a decorative wrist band; a vibrating incoming call indicator; a partial or full face display; touch screen input capability, accelerometer for wrist flick input capability, and/or side buttons for user inputs; a Bluetooth antenna; a Bluetooth transmitter and receiver; a rechargeable battery; a connector or wireless charging element; a display/general purpose control unit with firmware; and standard Bluetooth link and application software on an associated cellular phone. As described, a smart phone can transmit related notifications, such as email messages or incoming calls to the wearable electronic device via a wireless network. Since any communication between the smart phone and the wearable electronic device will consume the power of the wearable electronic device, the power usage efficiency of the wearable electronic device can be improved if the communications between the smart phone and the wearable electronic device are appropriately managed. On the other hand, in some cases, the transmission of the communications between the smart phone and the wearable electronic device may be unnecessary. For examples, when a user currently uses a smart phone, and the smart phone receives an incoming call at this time, the reasonable way to notify the incoming call is directly displaying the incoming call via the smart phone rather than transmitting the incoming call to a wearable device. Furthermore, the repeated notifications can also bother the user when two devices show the same notification.

### SUMMARY

Methods and systems for communication management between an electronic device and a wearable electronic device are provided, wherein the communications between the electronic device, such as a smart phone and the wearable electronic device can be appropriately managed.

In an embodiment of a method for communication management between an electronic device and a wearable electronic device, it is determined whether a display unit of the electronic device is currently active when the electronic device receives an event. When the display unit is not currently active, the event is transmitted to the wearable electronic device via a wireless network, thereby indicating the occurrence corresponding to the event via the wearable electronic device. When the display unit is currently active, a notification corresponding to the event is directly generated via the electronic device.

An embodiment of a system for communication management between an electronic device and a wearable electronic device comprises a wireless connecting unit, a display unit, and a processing unit. When the electronic device receives an event, the processing unit determines whether the display unit is currently active. When the display unit is not currently active, the processing unit transmits the event to the wearable electronic device using the wireless connecting unit via a wireless network, thereby indicating the occurrence corresponding to the event via the wearable electronic device. When the display unit is currently active, the processing unit directly generates a notification corresponding to the event via the electronic device.

In some embodiments, the event is not transmitted to the wearable electronic device when the display unit is currently active.

In some embodiments, it is determined whether the electronic device connects to the wearable electronic device via the wireless network. When the electronic device connects to the wearable electronic device via the wireless network, it is determined whether the display unit is currently active.

In some embodiments, it is determined whether an input unit of the electronic device receives any input. When the input unit receives an input, and the display unit is currently active, the transmission of the event from the electronic device to the wearable electronic device is cancelled.

In some embodiments, the input unit and the display unit are integrated into a touch-sensitive screen for displaying data and receiving inputs.

In some embodiments, it is determined whether the electronic device moves according to data detected by a sensor of the electronic device. When the electronic device moves, and the display unit is currently active, the notification corresponding to the event is directly generated via the electronic device.

In some embodiments, it is determined whether a specific object is captured by an image capture unit. When the specific object is captured by the image capture unit, and the display unit is currently active, the notification corresponding to the event is directly generated via the electronic device.

In some embodiments, the event comprises a notification corresponding to an incoming call, a message, an email message, or a calendar reminder.

Methods for communication management between an electronic device and a wearable electronic device may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a system for communication management between an electronic device and a wearable electronic device of the invention;
Fig. 2 is a schematic diagram illustrating another embodiment of a system for communication management between an electronic device and a wearable electronic device of the invention;
Fig. 3 is a schematic diagram illustrating an embodiment of a wearable electronic device of the invention;
Fig. 4 is a flowchart of an embodiment of a method for communication management between an electronic device and a wearable electronic device of the invention;
Fig. 5 is a flowchart of another embodiment of a method for communication management between an electronic device and a wearable electronic device of the invention;
Fig. 6 is a flowchart of another embodiment of a method for communication management between an electronic device and a wearable electronic device of the invention; and
Fig. 7 is a flowchart of another embodiment of a method for communication management between an electronic device and a wearable electronic device of the invention.

### DETAILED DESCRIPTION OF THE INVENTION

Methods and systems for communication management between an electronic device and a wearable electronic device are provided.

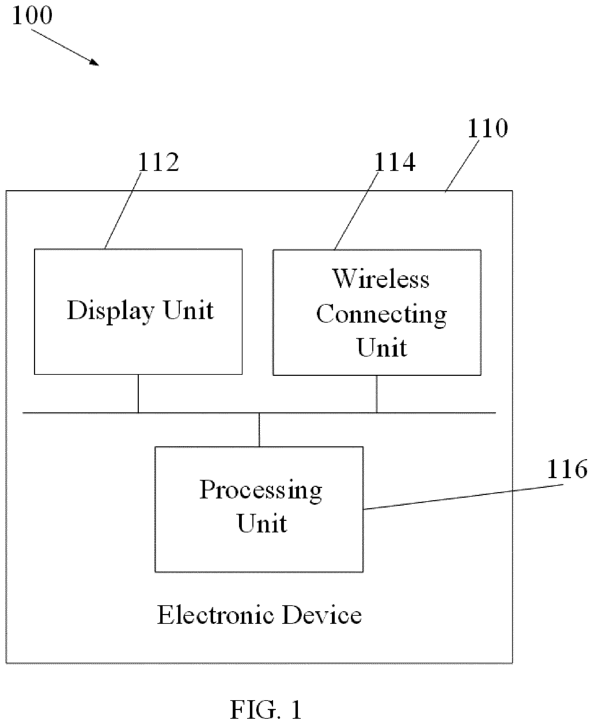

Fig. 1 is a schematic diagram illustrating an embodiment of a system for communication management between an electronic device and a wearable electronic device of the invention. The system for communication management between an electronic device and a wearable electronic device 100 can be used in an electronic device 110, such as a mobile phone, a smart phone, a PDA (Personal Digital Assistant), a GPS (Global Positioning System), a notebook, a tablet computer, or other portable device. As shown in Fig. 1, the electronic device 110 comprises a display unit 112, a wireless connecting unit 114, and a processing unit 116. The display unit 112 can display related information, such as images, interfaces, and related data. The wireless connecting unit 114 can connect to other electronic devices having wireless connecting capabilities via a wireless network, such as Wi-Fi or Bluetooth network. The processing unit 116 can control related operations of hardware and software in the electronic device 110, and perform the methods for communication management between an electronic device and a wearable electronic device of the invention, which will be discussed in the following paragraphs. It is understood that, in some embodiments, the electronic device 110 can further comprise an input unit (not shown in Fig. 1) for receiving any input for the electronic device 110. In some embodiments, the input unit may be any physical button of the electronic device. In some embodiments, the display unit 112 and the input unit can be integrated into a touch-sensitive screen. Users can directly input related data to the electronic device 110 via the touch-sensitive screen. Further, in some embodiments, the electronic device 110 can comprise a sensor (not shown in Fig. 1), such as an accelerometer and/or a Gyro sensor for detecting the movement of the electronic device 110. In some embodiments, the electronic device 110 can further comprise an image capture unit (not shown in Fig. 1) for obtaining an image.

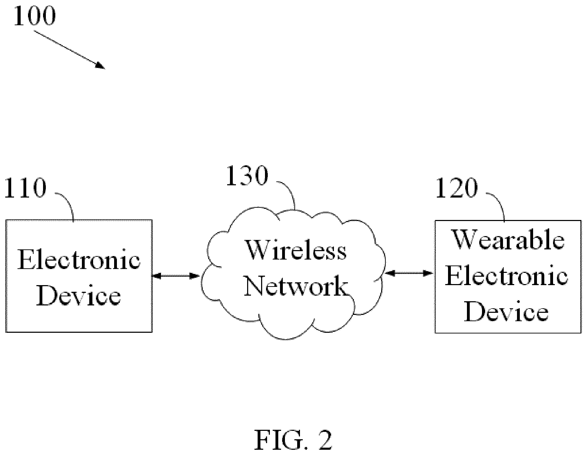

Fig. 2 is a schematic diagram illustrating another embodiment of a system for communication management between an electronic device and a wearable electronic device of the invention. The system for communication management between an electronic device and a wearable electronic device 100 comprises an electronic device 110 and a wearable electronic device 120. In some embodiments, the electronic device 110 may be a portable device, such as a mobile phone, a smart phone, a PDA, a GPS, a notebook, or a tablet computer. In some embodiments, the electronic device 110 can connect to the wearable electronic device 120 via a wireless network 130, such as Wi-Fi or Bluetooth network.

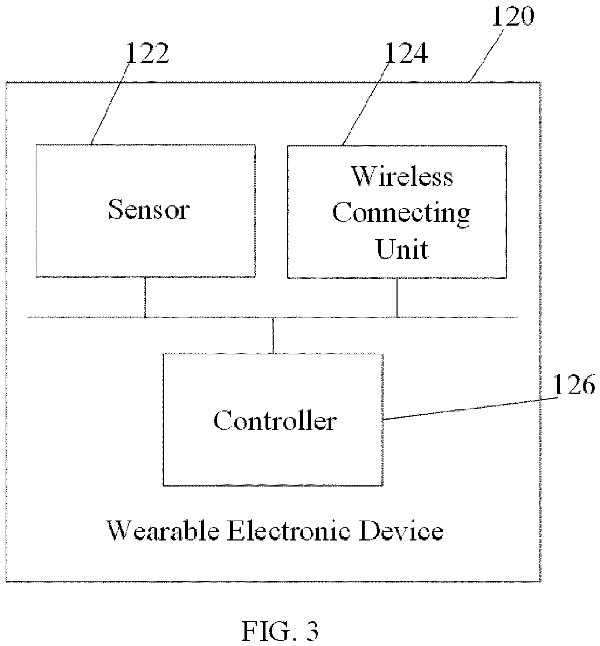

Fig. 3 is a schematic diagram illustrating an embodiment of a wearable electronic device of the invention. As shown in Fig. 3, the wearable electronic device 120 comprises at least one sensor 122, a wireless connecting unit 124, and a controller 126. The sensor 122 can detect related data. It is understood that, in some embodiments, the sensor 122 may be an accelerometer such as a G-sensor for generating information of velocity and displacement when the device moves. In some embodiments, the sensor 122 may be a Gyro sensor for generating information of angular acceleration when the device moves. In some embodiments, the sensor 122 can detect the temperature, humidity, and/or pressure where the device is located. It is noted that, the above sensors are only examples of the present invention, and the present invention is not limited thereto. Any sensor which can detect related data of the device or any data around the device can be applied in the present invention. The wireless connecting unit 124 can connect to other electronic devices, such as the electronic device 110 having wireless connecting capabilities via a wireless network, such as Wi-Fi or Bluetooth network. The controller 126 can control related operations of hardware and software in the wearable electronic device 120, and perform the methods for communication management between an electronic device and a wearable electronic device of the invention, which will be discussed in the following paragraphs.

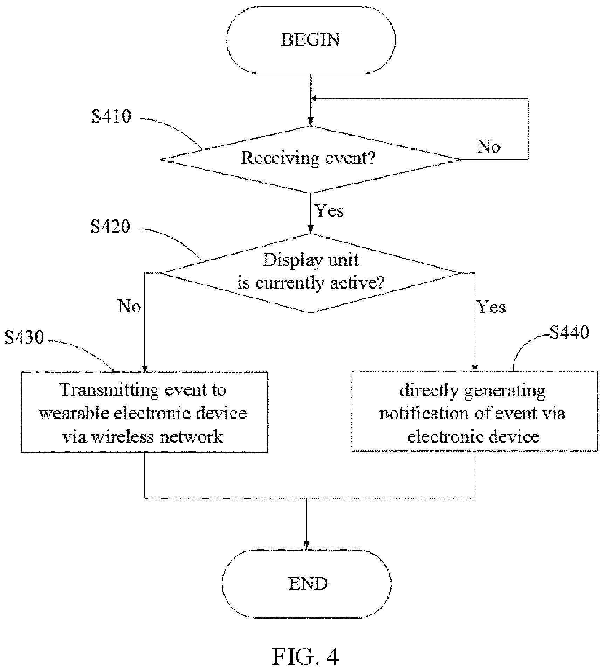

Fig. 4 is a flowchart of an embodiment of a method for communication management between an electronic device and a wearable electronic device of the invention. The method for communication management between an electronic device and a wearable electronic device can be used in an electronic device, such as a mobile phone, a smart phone, a PDA, a GPS, a notebook, a tablet computer, or other portable device.

In step S410, it is determined whether an event is received by the electronic device. It is understood that, in some embodiments, the event can comprise a notification corresponding to an incoming call, a message, an email message, and/or a calendar reminder. It is noted that, the above events are only examples of the invention, and the present invention is not limited thereto. When the electronic device does not receive an event (No in step S410), the procedure remains at step S410. When the electronic device receives an event (Yes in step S410), in step S420, it is determined whether a display unit of the electronic device is currently active. For example, it is determined whether the display unit is currently displaying data. When the display unit is not currently active (No in step S420), in step S430, the electronic device transmits the event to a wearable electronic device via a wireless network, thereby indicating/prompting the occurrence corresponding to the event via the wearable electronic device. When the display unit is currently active (Yes in step S420), in step S440, the electronic device directly generates a notification corresponding to the event. For example, the event can be displayed via the display unit. It is noted that, the predefined transmission of the event from the electronic device to the wearable electronic device is cancelled. That is the electronic device will not notify the wearable electronic device about the event.

It is understood that, in some embodiments, it is determined whether the electronic device currently connects to the wearable electronic device. When the electronic device connects to the wearable electronic device, it is determined whether the display unit is currently active. When the display unit is currently active, the event is not transmitted to the wearable electronic device via the wireless network.

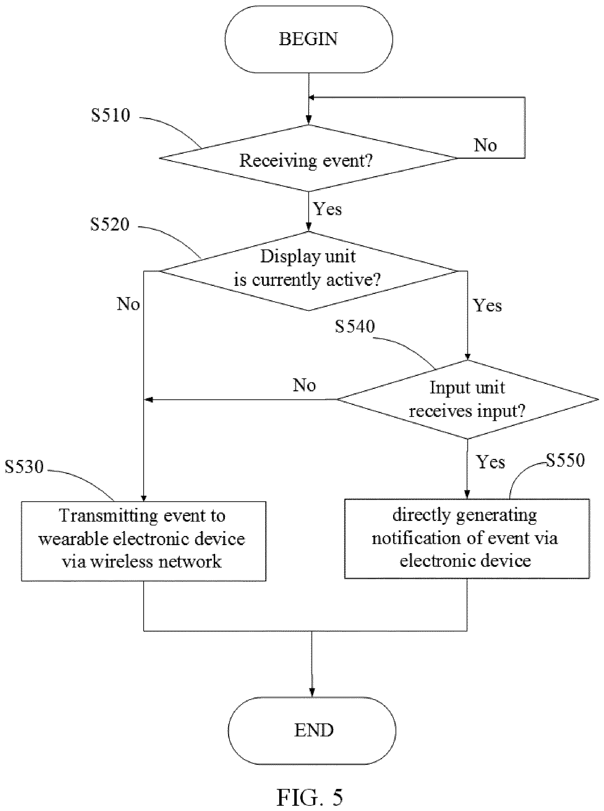

Fig. 5 is a flowchart of another embodiment of a method for communication management between an electronic device and a wearable electronic device of the invention. The method for communication management between an electronic device and a wearable electronic device can be used in an electronic device, such as a mobile phone, a smart phone, a PDA, a GPS, a notebook, a tablet computer, or other portable device.

In step S510, it is determined whether an event is received by the electronic device. Similarly, in some embodiments, the event can comprise a notification corresponding to an incoming call, a message, an email message, and/or a calendar reminder. It is noted that, the above events are only examples of the invention, and the present invention is not limited thereto. When the electronic device does not receive an event (No in step S510), the procedure remains at step S510. When the electronic device receives an event (Yes in step S510), in step S520, it is determined whether a display unit of the electronic device is currently active. When the display unit is not currently active (No in step S520), in step S530, the electronic device transmits the event to a wearable electronic device via a wireless network, thereby indicating/prompting the occurrence corresponding to the event via the wearable electronic device. When the display unit is currently active (Yes in step S520), in step S540, it is determined whether an input unit of the electronic device receives any input. It is understood that, in some embodiments, the input unit may be any physical button of the electronic device. In some embodiments, the input unit and the display unit can be integrated into a touch-sensitive screen for displaying data and receiving inputs. It is understood that, in some embodiments, step S540 can determine whether the input unit receives an input in a predefined interval before the event is received and/or after the event is received. When the input unit does not receive any input (No in step S540), in step S530, the electronic device transmits the event to a wearable electronic device via a wireless network, thereby indicating/prompting the occurrence corresponding to the event via the wearable electronic device. When the input unit receives an input (Yes in step S540), in step S550, the electronic device directly generates a notification corresponding to the event. Similarly, the predefined transmission of the event from the electronic device to the wearable electronic device is cancelled. That is the electronic device will not notify the wearable electronic device about the event.

Similarly, in some embodiments, it is determined whether the electronic device currently connects to the wearable electronic device. When the electronic device connects to the wearable electronic device, it is determined whether the display unit is currently active. When the display unit is currently active, and the input unit receives an input, the predefined transmission of the event from the electronic device to the wearable electronic device is cancelled.

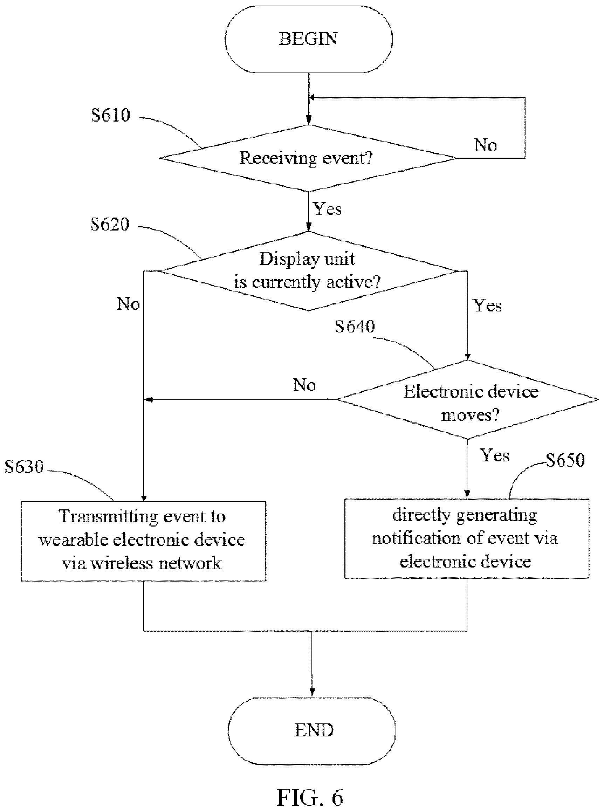

Fig. 6 is a flowchart of another embodiment of a method for communication management between an electronic device and a wearable electronic device of the invention. The method for communication management between an electronic device and a wearable electronic device can be used in an electronic device, such as a mobile phone, a smart phone, a PDA, a GPS, a notebook, a tablet computer, or other portable device.

In step S610, it is determined whether an event is received by the electronic device. Similarly, in some embodiments, the event can comprise a notification corresponding to an incoming call, a message, an email message, and/or a calendar reminder. It is noted that, the above events are only examples of the invention, and the present invention is not limited thereto. When the electronic device does not receive an event (No in step S610), the procedure remains at step S610. When the electronic device receives an event (Yes in step S610), in step S620, it is determined whether a display unit of the electronic device is currently active. When the display unit is not currently active (No in step S620), in step S630, the electronic device transmits the event to a wearable electronic device via a wireless network, thereby indicating/prompting the occurrence corresponding to the event via the wearable electronic device. When the display unit is currently active (Yes in step S620), in step S640, it is determined whether the electronic device moves according to the data detected by a sensor, such as an accelerometer and/or a Gyro sensor of the electronic device. It is understood that, in some embodiments, step S640 can determine whether the electronic device moves in a predefined interval before the event is received and/or after the event is received. When the electronic device does not move (No in step S640), in step S630, the electronic device transmits the event to a wearable electronic device via a wireless network, thereby indicating/prompting the occurrence corresponding to the event via the wearable electronic device. When the electronic device moves (Yes in step S640), in step S650, the electronic device directly generates a notification corresponding to the event. Similarly, the predefined transmission of the event from the electronic device to the wearable electronic device is cancelled. That is the electronic device will not notify the wearable electronic device about the event.

Similarly, in some embodiments, it is determined whether the electronic device currently connects to the wearable electronic device. When the electronic device connects to the wearable electronic device, it is determined whether the display unit is currently active. When the display unit is currently active, and the electronic device moves, the predefined transmission of the event from the electronic device to the wearable electronic device is cancelled.

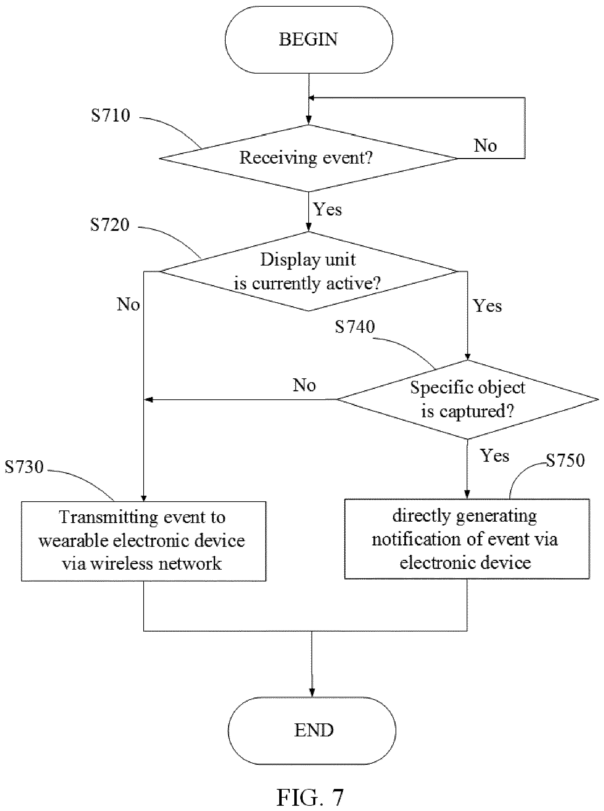

Fig. 7 is a flowchart of another embodiment of a method for communication management between an electronic device and a wearable electronic device of the invention. The method for communication management between an electronic device and a wearable electronic device can be used in an electronic device, such as a mobile phone, a smart phone, a PDA, a GPS, a notebook, a tablet computer, or other portable device.

In step S710, it is determined whether an event is received by the electronic device. Similarly, in some embodiments, the event can comprise a notification corresponding to an incoming call, a message, an email message, and/or a calendar reminder. It is noted that, the above events are only examples of the invention, and the present invention is not limited thereto. When the electronic device does not receive an event (No in step S710), the procedure remains at step S710. When the electronic device receives an event (Yes in step S710), in step S720, it is determined whether a display unit of the electronic device is currently active. When the display unit is not currently active (No in step S720), in step S730, the electronic device transmits the event to a wearable electronic device via a wireless network, thereby indicating/prompting the occurrence corresponding to the event via the wearable electronic device. When the display unit is currently active (Yes in step S720), in step S740, it is determined whether a specific object, such as eyes of a human is detected according to the image captured by an image capture unit of the electronic device. It is understood that, in some embodiments, step S740 can determine whether a specific object is captured by the image capture unit in a predefined interval before the event is received and/or after the event is received. When the specific object is not captured by the image capture unit (No in step S740), in step S730, the electronic device transmits the event to a wearable electronic device via a wireless network, thereby indicating/prompting the occurrence corresponding to the event via the wearable electronic device. When the specific object is captured by the image capture unit (Yes in step S740), in step S750, the electronic device directly generates a notification corresponding to the event. Similarly, the predefined transmission of the event from the electronic device to the wearable electronic device is cancelled. That is the electronic device will not notify the wearable electronic device about the event.

Similarly, in some embodiments, it is determined whether the electronic device currently connects to the wearable electronic device. When the electronic device connects to the wearable electronic device, it is determined whether the display unit is currently active. When the display unit is currently active, and the specific object is captured by the image capture unit, the predefined transmission of the event from the electronic device to the wearable electronic device is cancelled.

For example, a user can use a finger to scroll data displayed in the touch-sensitive screen. At this time, when the smart phone receives an incoming call, a notification corresponding to the incoming call will not be transmitted to a wearable device coupled with the smart phone, but directly displaying the incoming call via the smart phone.

Therefore, the methods and systems for communication management between an electronic device and a wearable electronic device of the present invention can appropriately manage the communications between an electronic device, such as a smart phone and a wearable electronic device, thereby realizing smart communications and further improving power management between devices.

Methods for communication management between an electronic device and a wearable electronic device may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

## Claims

1. A method for communication management between an electronic device (110) and a wearable electronic device (120) wherein the method is **characterized by** the following steps performed by a processing unit (116) of the electronic device (110):
determining whether a display unit (112) of the electronic device (110) is currently active when the electronic device (110) receives an event;
when the display unit (112) is not currently active, transmitting the event to the wearable electronic device (120) via a wireless network (130), thereby indicating the occurrence corresponding to the event via the wearable electronic device (120); and
when the display unit (112) is currently active, directly generating a notification corresponding to the event via the electronic device (110).

2. The method of claim 1, wherein the event is not transmitted to the wearable electronic device (120) when the display unit is (112) currently active.

3. The method of claim 1 or 2, further comprising:
determining whether the electronic device (110) connects to the wearable electronic device (120) via the wireless network (130); and
when the electronic device (110) connects to the wearable electronic device (120) via the wireless network, determining whether the display unit (112) is currently active.

4. The method of claim 1, 2 or 3 further comprising:
determining whether an input unit of the electronic device (110) receives any input; and
when the input unit receives an input, and the display unit (112) is currently active, directly generating the notification corresponding to the event via the electronic device (110).

5. The method of claim 4, wherein the input unit (112) and the display unit (112) are integrated into a touch-sensitive screen for displaying data and receiving inputs.

6. The method of claim 1, 2, 3, 4 or 5, further comprising:
determining whether the electronic device (110) moves according to data detected by a sensor (122) of the electronic device (110); and
when the electronic device (110) moves, and the display unit (112) is currently active, directly generating the notification corresponding to the event via the electronic device (110).

7. The method of claim 1, 2, 3, 4, 5 or 6, further comprising:
determining whether a specific object is captured by an image capture unit of the electronic device (110); and
when the specific object is captured by the image capture unit, and the display unit (112) is currently active, directly generating the notification corresponding to the event via the electronic device (110).

8. The method of claim 1, 2, 3, 4, 5, 6 or 7, wherein the event comprises a notification corresponding to an incoming call, a message, an email message, or a calendar reminder.

9. A system (100) for communication management between an electronic device (110) and a wearable electronic device (120) the system comprising an electronic device (110) and a wearable electronic device (120),
the electronic device (110) comprising:
a wireless connecting unit (114);
a display unit (112);
a processing unit (116); and
**characterized in that**
the processing unit (116) is adapted for determining whether the display unit (112) is currently active when the electronic device (110) receives an event, transmitting the event to the wearable electronic device (120) using the wireless connecting unit (114) via a wireless network (130), thereby indicating the occurrence corresponding to the event via the wearable electronic device (120) when the display unit (112) is not currently active, and directly generating a notification corresponding to the event via the electronic device (110) when the display unit (112) is currently active.

10. A machine-readable storage medium comprising a computer program, which, when executed, causes a device to perform a method for communication management between an electronic device (110) and a wearable electronic device (120), wherein the method is **characterized by** the following steps performed by a processing unit (116) of the electronic device (110):
determining whether a display unit (112) of the electronic device (110) is currently active when the electronic device (110) receives an event;
when the display unit (112) is not currently active, transmitting the event to the wearable electronic device (120) via a wireless network (130), thereby indicating the occurrence corresponding to the event via the wearable electronic device (120); and
when the display unit (112) is currently active, directly generating a notification corresponding to the event via the electronic device (110).

## Patentansprüche

1. Verfahren zur Kommunikationsverwaltung zwischen einer elektronischen Vorrichtung (110) und einer am Körper tragbaren elektronischen Vorrichtung (120), wobei das Verfahren **gekennzeichnet ist durch** die folgenden Schritte, welche von einer Verarbeitungseinheit (116) der elektronischen Vorrichtung (110) ausgeführt werden:
Bestimmen, ob eine Anzeigeeinheit (112) der elektronischen Vorrichtung (110) gegenwärtig aktiv ist, wenn die elektronische Vorrichtung (110) ein Ereignis empfängt;
Übertragen des Ereignisses an die am Körper tragbare elektronische Vorrichtung (120) über ein drahtloses Netzwerk (130), wenn die Anzeigeeinheit (112) gegenwärtig nicht aktiv ist, wodurch das Auftreten entsprechend dem Ereignis über die am Körper tragbare elektronische Vorrichtung (120) angegeben wird; und
unmittelbares Erzeugen einer Benachrichtigung entsprechend dem Ereignis über die elektronische Vorrichtung (110), wenn die Anzeigeeinheit (112) gegenwärtig aktiv ist.

2. Verfahren nach Anspruch 1, wobei das Ereignis nicht an die am Körper tragbare elektronische Vorrichtung (120) übertragen wird, wenn die Anzeigeeinheit (112) gegenwärtig aktiv ist.

3. Verfahren nach Anspruch 1 oder 2, weiterhin Folgendes umfassend:
Bestimmen, ob die elektronische Vorrichtung (110) über das drahtlose Netzwerk (130) mit der am Körper tragbaren elektronischen Vorrichtung (120) verbunden ist; und
Bestimmen, ob die Anzeigeeinheit (112) gegenwärtig aktiv ist, wenn die elektronische Vorrichtung (110) über das drahtlose Netzwerk (112) mit der am Körper tragbaren elektronischen Vorrichtung (120) verbunden ist.

4. Verfahren nach Anspruch 1, 2 oder 3, weiterhin Folgendes umfassend:
Bestimmen, ob eine Eingabeeinheit der elektronischen Vorrichtung (110) eine Eingabe erhält; und
unmittelbares Erzeugen der Benachrichtigung entsprechend dem Ereignis über die elektronische Vorrichtung (110), wenn die Eingabeeinheit eine Eingabe erhält und die Anzeigeeinheit (112) gegenwärtig aktiv ist.

5. Verfahren nach Anspruch 4, wobei die Eingabeeinheit (112) und die Anzeigeeinheit (112) in einen berührungsempfindlichen. Bildschirm zum Anzeigen von Daten und zum Erhalten von Eingaben integriert sind.

6. Verfahren nach Anspruch 1, 2, 3, 4 oder 5, weiterhin Folgendes umfassend:
Bestimmen, ob sich die elektronische Vorrichtung (110) gemäß Daten, welche von einem Sensor (122) der elektronischen Vorrichtung (110) detektiert werden, bewegt; und
unmittelbares Erzeugen der Benachrichtigung entsprechend dem Ereignis über die elektronische Vorrichtung (110), wenn sich die elektronische Vorrichtung (110) bewegt und die Anzeigeeinheit (112) gegenwärtig aktiv ist.

7. Verfahren nach Anspruch 1, 2, 3, 4, 5 oder 6, weiterhin Folgendes umfassend:
Bestimmen, ob ein spezifisches Objekt von einer Bildaufnahmeeinheit der elektronischen Vorrichtung (110) aufgenommen wird; und
unmittelbares Erzeugen der Benachrichtigung entsprechend dem Ereignis über die elektronische Vorrichtung (110), wenn das spezifische Objekt von der Bildaufnahmeeinheit aufgenommen wird und die Anzeigeeinheit (112) gegenwärtig aktiv ist.

8. Verfahren nach Anspruch 1, 2, 3, 4, 5, 6 oder 7, wobei das Ereignis eine Benachrichtigung entsprechend einem eingehenden Anruf, einer Meldung, einer E-Mail-Nachricht oder einer Kalendererinnerung umfasst.

9. System (100) zur Kommunikationsverwaltung zwischen einer elektronischen Vorrichtung (110) und einer am Körper tragbaren elektronischen Vorrichtung (120), das System eine elektronische Vorrichtung (110) und eine am Körper tragbare elektronische Vorrichtung (120) umfassend,
wobei die elektronische Vorrichtung (110) Folgendes umfasst:
eine drahtlose Verbindungseinheit (114);
eine Anzeigeeinheit (112);
eine Verarbeitungseinheit (116); und
**dadurch gekennzeichnet ist, dass**
die Verarbeitungseinheit (116) eingerichtet ist zum Bestimmen, ob die Anzeigeeinheit (112) gegenwärtig aktiv ist, wenn die elektronische Vorrichtung (110) ein Ereignis empfängt, zum Übertragen des Ereignisses an die am Körper tragbare elektronische Vorrichtung (120) unter Verwendung der drahtlosen Verbindungseinheit (114) über ein drahtloses Netzwerk (130), wodurch das Auftreten entsprechend dem Ereignis über die am Körper tragbare elektronische Vorrichtung (120) angegeben wird, wenn die Anzeigeeinheit (112) gegenwärtig nicht aktiv ist, und zum unmittelbaren Erzeugen einer Benachrichtigung entsprechend dem Ereignis über die elektronische Vorrichtung (110), wenn die Anzeigeeinheit (112) gegenwärtig aktiv ist.

10. Maschinenlesbares Speichermedium, ein Computerprogramm umfassend, welches, wenn es ausgeführt wird, bewirkt, dass eine Vorrichtung ein Verfahren zur Kommunikationsverwaltung zwischen einer elektronischen Vorrichtung (110) und einer am Körper tragbaren elektronischen Vorrichtung (120) ausführt, wobei das Verfahren **gekennzeichnet ist durch** die folgenden Schritte, welche von einer Verarbeitungseinheit (116) der elektronischen Vorrichtung (110) ausgeführt werden:
Bestimmen, ob eine Anzeigeeinheit (112) der elektronischen Vorrichtung (110) gegenwärtig aktiv ist, wenn die elektronische Vorrichtung (110) ein Ereignis empfängt;
Übertragen des Ereignisses an die am Körper tragbare elektronische Vorrichtung (120) über ein drahtloses Netzwerk (130), wenn die Anzeigeeinheit (112) gegenwärtig nicht aktiv ist, wodurch das Auftreten entsprechend dem Ereignis über die am Körper tragbare elektronische Vorrichtung (120) angegeben wird; und
unmittelbares Erzeugen einer Benachrichtigung entsprechend dem Ereignis über die elektronische Vorrichtung (110), wenn die Anzeigeeinheit (112) gegenwärtig aktiv ist.

## Revendications

1. Procédé de gestion de communication entre un dispositif électronique (110) et un dispositif électronique portable sur soi (120), dans lequel le procédé est **caractérisé par** les étapes suivantes, mises en oeuvre par une unité de traitement (116) du dispositif électronique (110) :
détermination du fait qu'une unité d'affichage (112) du dispositif électronique (110) est ou non couramment active quand le dispositif électronique (110) reçoit un événement ;
quand l'unité d'affichage (112) n'est pas couramment active, transmission de l'événement au dispositif électronique portable sur soi (120) via un réseau sans fil (130), indiquant ainsi l'occurrence correspondant à l'événement via le dispositif électronique portable sur soi (120) ; et
quand l'unité d'affichage (112) est couramment active, génération directe d'une notification correspondant à l'événement via le dispositif électronique (110).

2. Procédé selon la revendication 1, dans lequel l'événement n'est pas transmis au dispositif électronique portable sur soi (120) quand l'unité d'affichage (112) est couramment active.

3. Procédé selon la revendication 1 ou 2, comprenant en outre :
la détermination du fait que le dispositif électronique (110) se connecte ou non au dispositif électronique portable sur soi (120) via le réseau sans fil (130) ; et
quand le dispositif électronique (110) se connecte au dispositif électronique portable sur soi (120) via le réseau sans fil, la détermination du fait que l'unité d'affichage (112) est ou non couramment active.

4. Procédé selon la revendication 1, 2 ou 3, comprenant en outre :
la détermination du fait qu'une unité d'entrée du dispositif électronique (110) reçoit ou non une entrée quelconque ; et
quand l'unité d'entrée reçoit une entrée et que l'unité d'affichage (112) est couramment active, la génération directe de la notification correspondant à l'événement via le dispositif électronique (110).

5. Procédé selon la revendication 4, dans lequel l'unité d'entrée (112) et l'unité d'affichage (112) sont intégrées dans un écran tactile pour afficher des données et recevoir des entrées.

6. Procédé selon la revendication 1, 2, 3, 4 ou 5, comprenant en outre :
la détermination du fait que le dispositif électronique (110) se déplace ou non conformément à des données détectées par un capteur (122) du dispositif électronique (110) ; et
quand le dispositif électronique (110) se déplace et que l'unité d'affichage (112) est couramment active, la génération directe de la notification correspondant à l'événement via le dispositif électronique (110).

7. Procédé selon la revendication 1, 2, 3, 4, 5 ou 6, comprenant en outre :
la détermination du fait qu'un objet spécifique est capturé ou non par une unité de capture d'image du dispositif électronique (110) ; et
quand l'objet spécifique est capturé par l'unité de capture d'image et que l'unité d'affichage (112) est couramment active, la génération directe de la notification correspondant à l'événement via le dispositif électronique (110).

8. Procédé selon la revendication 1, 2, 3, 4, 5, 6 ou 7, dans lequel l'événement comprend une notification correspondant à un appel entrant, un message, un message courriel ou un rappel de calendrier.

9. Système (100) de gestion de communication entre un dispositif électronique (110) et un dispositif électronique portable sur soi (120),
le système comprenant un dispositif électronique (110) et un dispositif électronique portable sur soi (120),
le dispositif électronique (110) comprenant :
une unité de connexion sans fil (114) ;
une unité d'affichage (112) ;
une unité de traitement (116) ; et
**caractérisé en ce que**
l'unité de traitement (116) est adaptée pour déterminer si l'unité d'affichage (112) est ou non couramment active quand le dispositif électronique (110) reçoit un événement, pour transmettre l'événement au dispositif électronique portable sur soi (120) à l'aide de l'unité de connexion sans fil (114) via un réseau sans fil (130), indiquant ainsi l'occurrence correspondant à l'événement via le dispositif électronique portable sur soi (120) quand l'unité d'affichage (112) n'est pas couramment active, et pour générer directement une notification correspondant à l'événement via le dispositif électronique (110) quand l'unité d'affichage (112) est couramment active.

10. Support de stockage lisible par une machine comprenant un programme informatique qui, quand il est exécuté, commande à un dispositif de mettre en oeuvre un procédé de gestion de communication entre un dispositif électronique (110) et un dispositif électronique portable sur soi (120), dans lequel le procédé est **caractérisé par** les étapes suivantes, mises en oeuvre par une unité de traitement (116) du dispositif électronique (110) :
détermination du fait qu'une unité d'affichage (112) du dispositif électronique (110) est ou non couramment active quand le dispositif électronique (110) reçoit un événement ;
quand l'unité d'affichage (112) n'est pas couramment active, transmission de l'événement au dispositif électronique portable sur soi (120) via un réseau sans fil (130), indiquant ainsi l'occurrence correspondant à l'événement via le dispositif électronique portable sur soi (120) ; et
quand l'unité d'affichage (112) est couramment active, génération directe d'une notification correspondant à l'événement via le dispositif électronique (110).
